(19) Europäisches Patentamt
European Patent Office
Office européen des brevets

(11) **EP 4 651 100 A1**

# (12) EUROPEAN PATENT APPLICATION

(43) Date of publication:
**19.11.2025 Bulletin 2025/47**

(21) Application number: **25382523.6**

(22) Date of filing: **23.05.2025**

(51) International Patent Classification (IPC):
**G06V 10/82** *(2022.01)*     **G06V 40/16** *(2022.01)*

(52) Cooperative Patent Classification (CPC):
**G06V 10/82; G06V 40/172**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(71) Applicant: **Fundación Centro Tecnoloxico de Telecomunicacions de Galicia**
**36214 Vigo (ES)**

(72) Inventors:
• **GARCÍA PARADELA, Jorge**
**15169 A Coruña (ES)**
• **PÉREZ VIEITES, Diego**
**36418 Pontevedra (ES)**

(74) Representative: **Clarke, Modet y Cía., S.L.**
**C/ Suero de Quiñones 34-36**
**28002 Madrid (ES)**

Remarks:
Amended claims in accordance with Rule 137(2) EPC.

(54) **COMPUTER-IMPLEMENTED METHOD AND DEEPFAKE PROTECTION SYSTEM FOR PROTECTING IMAGE OR VIDEO CONTENT AGAINST THE GENERATION OF DEEPFAKES**

(57)     Computer-implemented method and deepfake protection system for protecting image or video content against the generation of deepfakes. The method (100) comprises receiving (102) at least one original image (10) and iteratively:
• detecting (106) faces with a first face detector (16),
• calculating (108) a loss (18) using a loss function associated with the first face detector (16),
• calculating (110) a gradient of the loss (18),
• generating (112) an adversarial image by applying projected gradient descent (20) on the loss function using a projection operator, wherein the gradient step size is obtained using an optimizer (22) and the projection operator is a projection on a $\varepsilon$-ball of radius $\varepsilon$ around the original image (10),
• updating (114) a copy (14) of the original image with the adversarial image.

The method obtains (116) a protected image (12) associated to each original image (10), the protected image (12) being the adversarial image obtained in the last iteration of the corresponding original image (10).

FIG. 2

## Description

## FIELD

The present invention is comprised within the field of systems and methods that protect images or video against deepfakes.

## BACKGROUND

The rapid advancement of generative artificial intelligence (AI) has led to the emergence of sophisticated techniques capable of realistically manipulating identities through audio, image, and video. Among these, deepfake technology enables the seamless replacement of a person's face in a video, posing significant security and ethical concerns. The training of such AI models requires extensive datasets, often sourced from publicly available images, videos, and audio recordings found on social media and other digital platforms.

Deepfakes tools such as DeepLiveCam, Roop, DeepFaceLab, FaceShifter, or FaceSwap have emerged in recent years to revolutionize the field of deepfakes. This presents a great ethical debate and a challenge to many aspects of our society. Impersonation, theft, and damage to personal integrity are some of the difficulties. A wide variety of training architectures exist, often combining different components suited to specific tasks. These may include autoencoders, GAN-based models, facial landmark detectors (e.g., FAN), face detectors, or lip-syncing algorithms. Many approaches rely on hybrid architectures that integrate these elements to achieve realistic identity swaps, expression transfer, and temporal consistency.

DeepFaceLab and FaceSwap rely on autoencoders as their architectural backbone. These tools have historically been the most widely used for creating deepfakes. DeepFaceLab alone is estimated to power over 95% of all deepfake videos online due to its flexibility and high-quality output, while FaceSwap has gained popularity as an open-source alternative with an active development community. These autoencoders are trained for each specific source-target identity pair, either from scratch or using pre-trained models capable of encoding and decoding facial features in a generalizable way. The use of pre-trained models has proven effective in accelerating convergence and improving the realism of final outputs.

In terms of adversarial attacks, these deepfake models have so far been almost immune. Some of the approaches of the adversarial attacks necessitate knowledge of both the model and inference data. However, in the case of DeepFaceLab and Faceswap, these attacks are not applicable. These methods assume knowledge of the model's final weights and architecture, as well as access to the data used during inference. With DeepFaceLab and Faceswap neither condition holds; the models are fine-tuned per identity pair, and the inference data (video frames) are generated dynamically by the attacker. As such, there is no static or predictable input to defend, and no accessible target model to attack directly.

Data poisoning attacks are not effective in the context of deepfake systems such as DeepFaceLab and Faceswap. Data poisoning typically involves injecting corrupted data into a model during training, with the goal of altering its internal representations. However, in the case of deepfakes, the model is fine-tuned per identity pair, meaning it learns specifically from a limited set of data tied to each source and target identity. As a result, the model is prone to overfitting, which makes it less susceptible to data poisoning. Any imperceptible perturbations introduced into the source identity data might be present in the generated deepfake, but they do not interfere with the model's ability to accurately learn the identity characteristics for the specific task of face-swapping. In other words, the model remains highly specialized to the identity pair at hand, and the perturbations do not affect its learning process or hinder the creation of successful deepfakes.

Therefore, neither of the two approaches allow to protect content from deepfake models directly. The present invention overcomes this problem with an approach involving the corruption of the pre-processing that these deepfake tools perform prior to training or inference, providing protection against various face detectors that these tools use to automate their processes and facilitate usability.

## References

[1] Zhang S. et al., "S3FD: Single shot scale-invariant face Detector", Aug. 2017.

[2] Zhang K., et al., "Joint face detection and alignment using multitask cascaded convolutional networks", IEEE Signal Processing Letters, 23, 10, (Aug. 2016), 1499-1503.

[3] Wang C. et al., "OpenCV: DNN-based face Detection and Recognition", OpenCV, [n. d.].

[4] Athalye A. et al., "Towards deep learning models resistant to adversarial attacks", 2017.

[5] Yang B. et al., "Adversarial example generation with AdaBelief Optimizer and Crop Invariance", Feb. 2021.

[6] A. Mittal, A. K. Moorthy, and A. C. Bovik. 2012. No-Reference image quality assessment in the spatial domain. IEEE Transactions on Image Processing, 21, 12, (Aug. 2012), 4695-4708.

[7] Lugaresi C. et al., Mediapipe: a framework for building perception pipelines, 2019.

## SUMMARY

The present invention refers to a computer-implemented method and a deepfake protection system for protecting image or video content against the generation of deepfakes.

The present invention embeds a barely perceptible watermark into image or video content, effectively preventing its use in deepfake generation. By protecting their content, individuals can prevent unauthorized facial impersonation attempts. The invention implements adversarial attacks through gradient descent to disrupt face detection mechanisms commonly employed by deepfake creation tools. Protective measures are implemented against several prominent deepfake tools, with low visual impact on the protected content and good processing performance.

The method of protecting image or video content against the generation of deepfakes comprises receiving at least one original image, obtaining a copy of each original image and iteratively performing an optimization loop for each original image, at least until a stopping condition is met. Each iteration of the optimization loop includes the following steps:

- Detecting faces in the copy of the original image with a first face detector.

- Calculating a loss using a loss function associated with the first face detector.

- Calculating a gradient of the loss.

- Generating an adversarial image by applying projected gradient descent on the loss function using a projection operator, wherein the gradient step size is obtained using an optimizer and the projection operator is a projection on a $\varepsilon$-ball of radius $\varepsilon$ around the original image.

- Updating the copy of the original image with the adversarial image.

The method further comprises obtaining a protected image associated to each original image, the protected image being the adversarial image obtained in the last iteration of the corresponding original image.

In an embodiment, the method also provides defense against multiple deepfake generation methods simultaneously, by detecting a face in each original image received; extracting landmarks of the detected face; classifying, based on the landmarks, the detected face in a facial feature from a set of facial features; and selecting, from a set of face detectors, the first face detector used in the optimization loop based on the facial feature.

Another aspect of the present invention refers to a deepfake protection system for protecting image or video content against the generation of deepfakes, the system comprising at least one processor and at least one memory storing a set of instructions which, when executed by the at least one processor, causes the at least one processor to perform the method previously described.

A further aspect of the present invention refers to a computer program comprising instructions which, when the program is executed by a computer, cause the computer to carry out the method. The present invention also refers to a non-transitory computer-readable storage medium comprising computer code instructions that, when executed by one or more processors, cause the one or more processors to carry out the method.

## BRIEF DESCRIPTION OF THE DRAWINGS

A series of drawings which aid in better understanding the invention and which are expressly related with an embodiment of said invention, presented as a non-limiting example thereof, are very briefly described below.

Figure 1A shows a main architecture of deepfake tools. Figure 1B shows the generation of a deepfake video using an unprotected source video.

Figure 2 represents a flow diagram of a computer-implemented method of protecting image or video content against the generation of deepfakes according to an embodiment of the present invention.

Figure 3A shows the degradation of $S^3FD$ mean score over iterations for different $\varepsilon$ values. Figure 3B shows a protection provided by a protected image against the face detector of a deepfake tool where the size of the bounding boxes is maximized.

Figures 4A and 4B show a comparative analysis, in both quality and performance, of $S^3FD$ and MTCNN protection.

Figure 5 shows a comparison between an original image and protected images.

Figures 6A and 6B show logarithmic distribution of processing time for different $\varepsilon$ values for $S^3FD$ (Fig. 6A) and MTCNN (Fig. 6B) face detectors.

Figure 7 depicts the mean score degradation of $S^3FD$ face detectors as iterations increase, for different $\varepsilon$ values.

Figure 8 represents another flow diagram of the method applied to an original image.

Figure 9 shows a comparison of PSNR and BRISQUE values across different face detection models.

Figure 10 depicts a facial feature protection for faceswapping.

Figure 11 is a flow diagram of a method that provides protection simultaneously against multiple detectors.

Figure 12 shows the system architecture against multiple face detectors, according to an embodiment.

Figure 13 shows images of different facial features (blendshapes).

Figure 14 shows an example of preventing deepfakes from opening their mouths.

Figure 15 shows, according to an embodiment, a deepfake protection system for protecting image or video content against the generation of deepfakes.

Figure 16 shows the generation of a deepfake video using a protected video.

## DETAILED DESCRIPTION

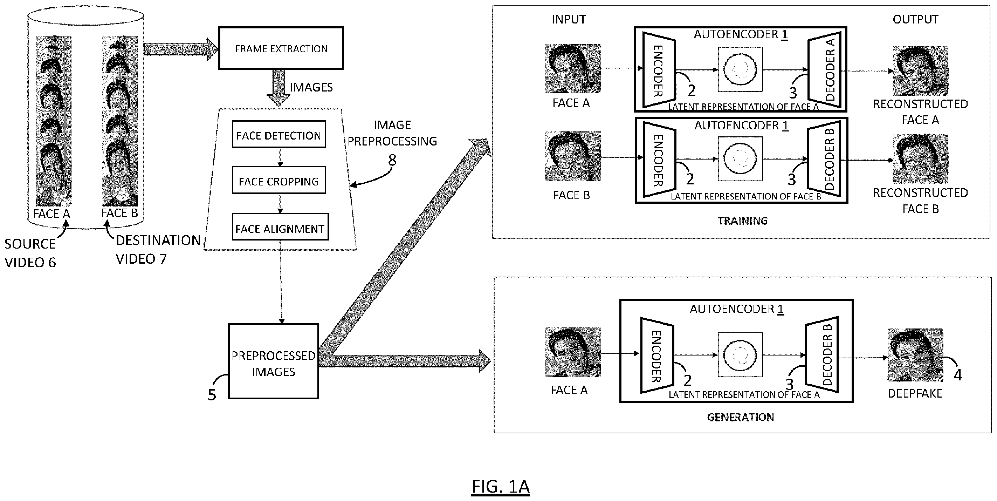

Many deepfakes tools available on the Internet are based on the architecture of **Figure 1A.** The core of a deepfake tool is an autoencoder 1 consisting of an encoder 2, intermediate layers and a decoder 3 that are trained from scratch or from pre-trained models to encode and decode images of face A (corresponding to person A) and images of face B (corresponding to person B). Within the architecture of the autoencoder 1 there are two different structures, one that specifies the decoder for each set and another that specifies the intermediate layers for each set.

The deepfake arises when common channels are used for one set and the specific component of the other set is used. In the example depicted in Figure 1A, a first training and a second training of the autoencoder 1 is performed for images of faces of person A and person B, arriving at particular configurations of the decoder 3 (decoder A and decoder B, respectively). For generating a deepfake 4 for the image of face A, the autoencoder 1 employs the same encoder 2 used for both faces A and B and the decoder B resulting for the training using faces of person B (that is, decoder A has been replaced with decoder B).

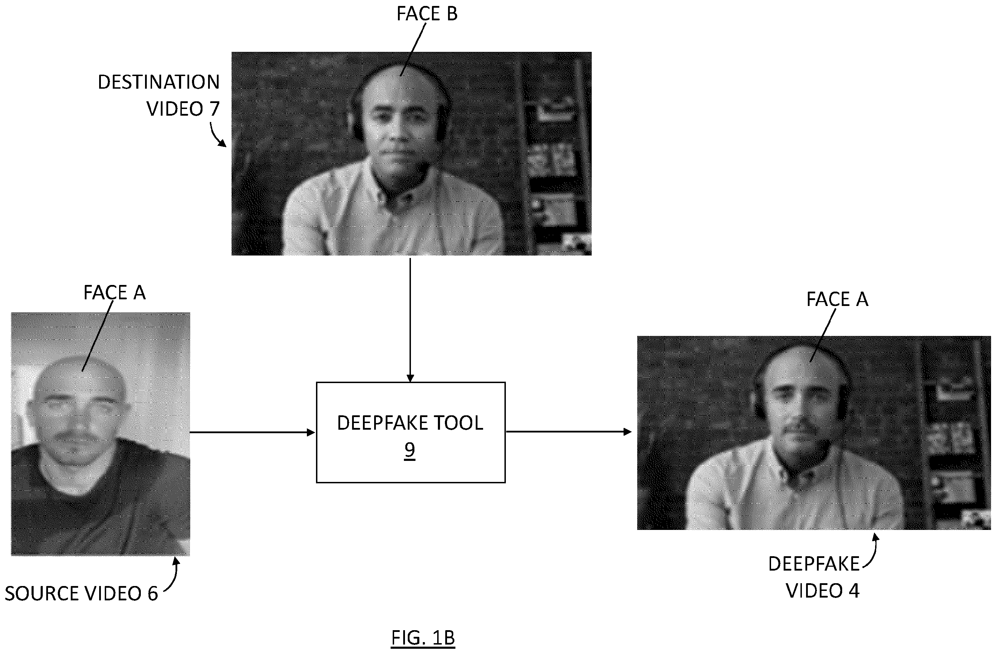

To train these models with different architectures, preprocessed images 5 of faces A and faces B and their landmarks are first obtained: face-centered, aligned and trimmed in the input dimensions of the encoder 2. To obtain the preprocessed images 5, a source video 6 containing the face of person A and a destination video 7 including the face of person B are retrieved and frames are extracted for each video, obtaining images to be preprocessed with the aim of replacing the face of person B in the destination video 7 with the face of person A. Faces are then detected in each frame, cropped and aligned. To crop and align images the deepfake tools first use face detection models (a face detector) to identify the bounding boxes and apply a trim with some margin. Therefore, image preprocessing 8 includes face detection, face cropping and face alignment. **Figure 1B** depicts an example in which a source video 6 and a destination video 7 is used by a deepfake tool 9 to generate a deepfake video 4 formed by the destination video with the face of the person B being replaced with the face of the person A of the source video 6.

In the face detection process the deepfake tools present a vulnerability, since they either work with these detection models automatically and mandatorily or are offered as an option to the user to streamline the preprocessing step of the data to generate deepfakes. For example, DeepFaceLab deepfake tool offers one face detector, $S^3FD$ (Single Shot Scale-invariant Face Detector) [1], whereas FaceSwap deepfake tool offers three different face detectors: $S^3FD$, MTCNN [2] and DN CV2 [3].

The present invention exploits this vulnerability by obtaining protected images of the faces of person A that are wrongly detected by the face detector used by the deepfake tool. Given a face detection model $f_\theta$ and an input image $x$, an adversarial example refers to a slightly perturbed version of the image x that causes the face detection model $f_\theta$ to behave incorrectly, either by detecting a face where there is none, or by failing to detect an actual face. This perturbation, denoted as $\delta$, is designed to be imperceptible to the human eye yet effective enough to fool the face detection model $f_\theta$. The generation of such an adversarial example can be formulated as the following optimization problem:

$$\delta_{adv} = \arg max_{\delta \in \Delta} \mathcal{L}(f_\theta(x + \delta))$$

Where x is the image and $\mathcal{L}$ represents the loss function associated with the face detector $f_\theta$. The perturbation $\delta$ is constrained to lie within a set $\Delta$, which restricts its magnitude to maintain imperceptibility. This set is usually defined in terms of the $\ell p$ - norm, where $\varepsilon$ is a small constant controlling the strength of the perturbation:

$$\Delta = \delta: \|\delta\|_p \leq \epsilon$$

To solve the above optimization problem, Projected Gradient Descent (PGD) [4] is used combined with an optimizer, preferably the AdaBelief [5] optimizer, to iteratively update the adversarial image. While PGD iteratively updates the input by following the gradient of the loss, the optimizer adjusts the step size to stabilize the updates and improve convergence. AdaBelief adjusts the step size based on the gradient's behavior, resulting in faster and more stable updates, especially when gradients are noisy or sparse, and allowing for more effective control over perturbation magnitudes. This combination leads to more efficient adversarial attacks, improving both performance and stability compared to traditional methods. Let $x_0$ be the original image and $x_t$ the adversarial image at iteration $t$. The update rule is given by:

$$x_{t+1} = \Pi_{\mathcal{B}_\epsilon(x_0)}(x_t - \eta_t \cdot \hat{g}_t)$$

The value $\eta_t$ is the optimizer step size at iteration $t$ and the projection operator $\Pi_{\mathcal{B}_\epsilon}(x_0)$ ensures the updated image remains within the $\varepsilon$-ball around the original image $x_0$, preserving imperceptibility. The $\hat{g}_t$ is the estimated gradient of the loss with respect to the image at iteration $t$, computed by AdaBelief:

$$\hat{g}_t = \frac{\widehat{m}_t}{\sqrt{\hat{s}_t} + \kappa}$$

Where $\hat{m}_t$ and $\hat{s}_t$ are the bias-corrected first and second moment estimates of the gradient, respectively, where $\hat{s}_t$ in AdaBelief is computed based on the deviation of the gradient from its exponential moving average rather than the squared gradient itself. Finally, $\kappa$ is a small constant added for numerical stability, preventing division by zero during the update.

The AdaBelief optimizer adjusts the step size $\eta_t$ adaptively based on gradient variance, combining the fast convergence of Adam with improved generalization [5]. In an embodiment, a base learning rate of 0.01 is used, which provides a good trade-off between convergence speed and stability. Other values for the learning rate may be applied.

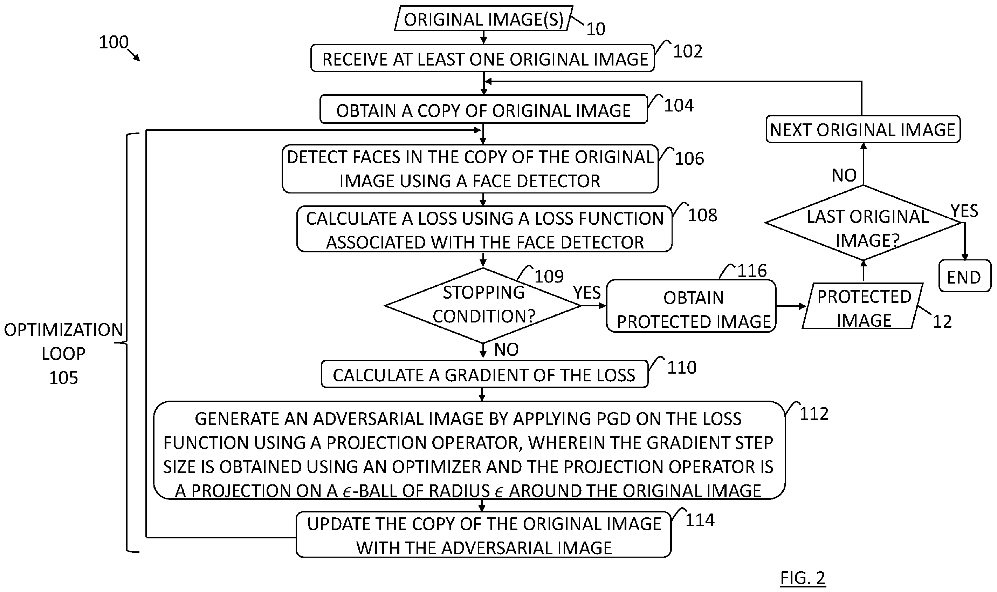

**Figure 2** is a flow diagram of a computer-implemented method 100 of protecting image or video content against the generation of deepfakes according to an embodiment of the present invention. The method 100 comprises receiving 102 at least one original image 10 (an image, a plurality of images or a video containing a plurality of frames, i.e. images), obtaining 104 a copy of each original image 10 and, for each original image 10, iteratively performing an optimization loop 105 at least until a stopping condition is met, each iteration of the optimization loop 105 including:

- Detecting 106 faces in the copy of the original image with a first face detector.

- Calculating 108 a loss using a loss function associated with the first face detector.

- Calculating 110 a gradient of the loss (which can be an estimated gradient of the loss).

- Generating 112 an adversarial image by applying projected gradient descent (PGD) on the loss function using a projection operator, wherein the gradient step size is obtained using an optimizer (e.g., Ada-

Belief) and the projection operator is a projection on a $\varepsilon$-ball of radius $\varepsilon$ around the original image.

- Updating 114 the copy of the original image with the adversarial image.

In the embodiment of Figure 2 the method 100 comprises checking 109 whether a stopping condition is met, the checking being performed just after the loss is calculated 108; however, this checking may be performed at any other instant during the iteration. The method further comprises obtaining 116, in the iteration when the stopping condition is met or after a predetermined number of iterations once said stopping condition is fulfilled, a protected image 12 associated to each original image 10, the protected image being the adversarial image obtained in the last iteration of the corresponding original image.

In an embodiment, the loss function is selected so as to minimize the number of detected faces. The loss function may be the sum of confidence scores of detected faces, and the stopping condition is preferably met when all the confidence scores drop below a confidence threshold $\tau$. Let $\mathcal{D}(x_t)$ denote the set of detection scores returned by the face detection model $f_\theta$ in iteration $t$, the optimization loop 105 stops when all the scores drop below a confidence threshold $\tau$, formally:

$$\forall s \in \mathcal{D}(x_t), s < \tau$$

At each iteration, the confidence scores of the bounding boxes (associated to detected faces) proposed by the first face detector are summed and used as the loss function. At each iteration, the loss is lower than the previous one until none of the proposed bounding boxes exceeds a predetermined threshold, which acts as the stopping condition. Additional iterations may be added as a margin once the stopping condition has been reached.

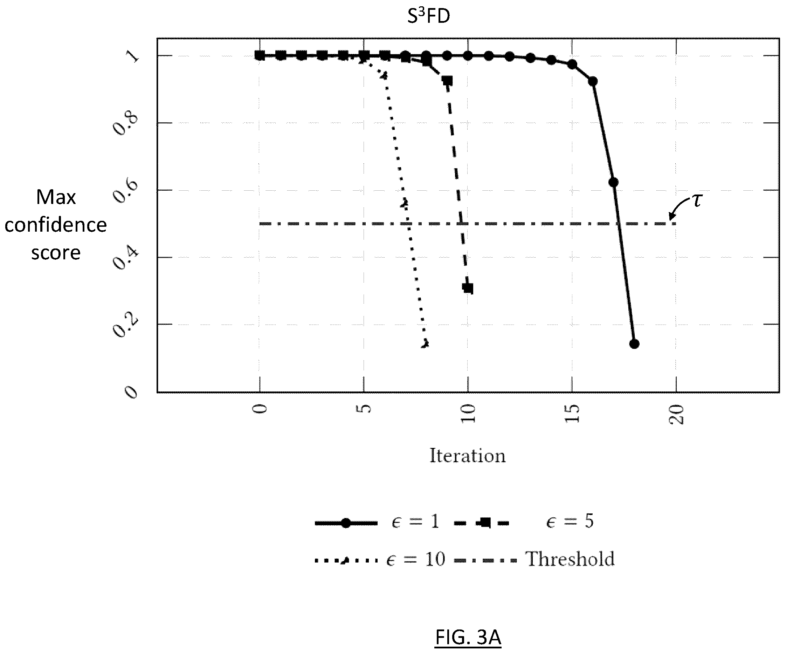

The selected value for $\tau$, which may be, for instance, 0.5 (although different values may be used), ensures that no bounding boxes in the adversarial image are considered confident enough by the first face detector. This indicates successful evasion of face detection while maintaining visual plausibility. As shown in **Figure 3A,** the maximum value of all the confidence scores of the first face detector decrease over the iterations of PGD. These scores drop suddenly, which highlights the importance of using an optimizer like Adabelief, as it can temporarily accelerate the process of protecting the images. It can be clearly seen that the decline of the confidence scores begins earlier in the iterations when $\varepsilon$ is higher. Additional iterations (e.g., 10 extra iterations) can be performed after the stopping condition is met, which can strengthen the adversarial attack, making the protected images 12 more robust.

In another embodiment, the loss function is selected instead to maximize the number of detected faces. In each iteration, the confidence score of the bounding boxes proposed by the first face detector is summed and used as the loss function. But, instead of advancing in the direction of the gradient, it advances in the opposite direction (in this case the optimizer is used to modify the image in the opposite direction to that determined in the gradient calculation, with the goal of increasing the loss in the next iteration, instead of reducing the loss). In each iteration, the loss is higher than the previous one, resulting in more and more bounding boxes that exceed the threshold. There are several alternatives for the stopping condition, one of which could be, for example, detecting more than X faces (e.g., 30 faces) and the first Y faces (e.g., 10 faces) having an area Z times (e.g., 10 times) smaller than the original. This method allows the detector to find thousands of faces with a very small area, making many options valid. The following is an example of the output of the original bounding box index over the iterations (after a few iterations, the bounding box that was originally the most probable and most accurate, is found in the 9000th most probable position):

[0, 0, 0, 0, 0, 0, 0, 0, 0, 0, 0, 0, 0, 0, 0, 0, 0, 0, 0, 0, 0, 1, 1, 2, 2, 2, 3, 4, 5, 6, 7, 8, 7, 9, 8, 10, 10, 11, 12, 15, 22, 35, 59, 159, 235, 520, 869, 1318, 1907, 2460, 3056, 3913, 4939, 5832, 6508, 7140, 7353, 7540, 7788, 7791, 7998, 8026, 8099, 8147, 8210, 8233, 8300, 8335, 8471, 8412, 8537, 8538, 8599, 8599, 8674, 8654, 8725, 8694, 8792, 8754, 8854, 8778, 8910, 8838, 8941, 8874, 8944, 8894, 8954, 8894, 8972, 8878, 8995, 8913, 9005, 8950, 9032, 8997, 9059, 9019, 9112...].

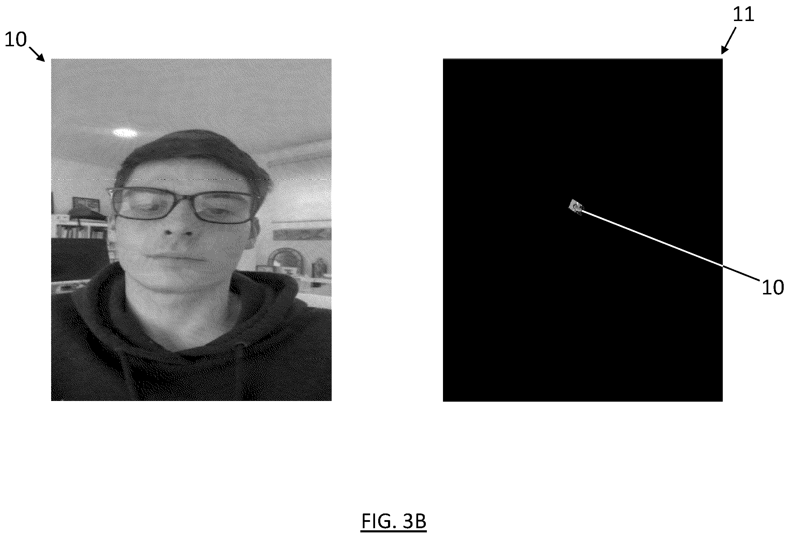

In yet another embodiment, the loss function is selected so as to maximize the size of the bounding boxes. In each iteration, the area of each bounding box proposed by the first face detector is calculated. The sum of all the areas is used as the loss. In each iteration, this sum increases, and the proposed bounding boxes become increasingly larger. The proposed stopping condition expects the bounding box with the smallest area to exceed a threshold, such as a predetermined times (e.g. 10 times) the area of the original bounding box. Additional iterations may be added (e.g., 10 more iterations) after the stopping condition has been met. In this embodiment, when the gradient loss (sum of areas of the bounding boxes detected by the first face detector) is calculated, the optimizer is used to modify the image in the opposite direction to that determined in the gradient calculation, with the goal of increasing the loss in the next iteration. With this process the bounding box becomes larger with each iteration, and at high iterations the result is an almost completely black image 11 with the original image 10 of a few pixels in the middle, as shown in **Figure 3B,** depicting an original image 10 with a face (left) and the result of the first face detector inference with a protected image at high iterations (right).

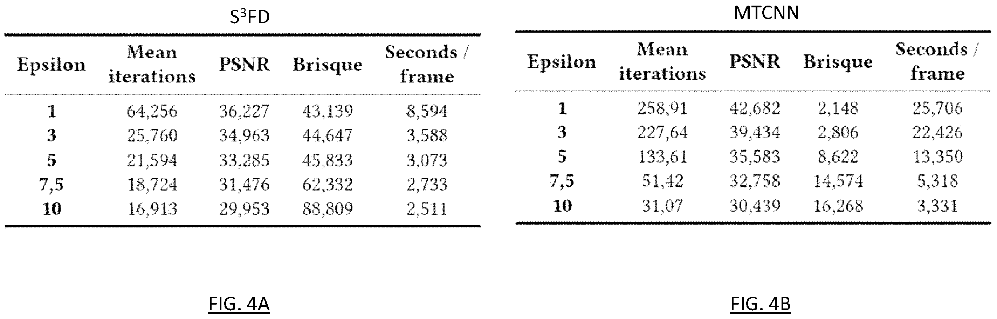

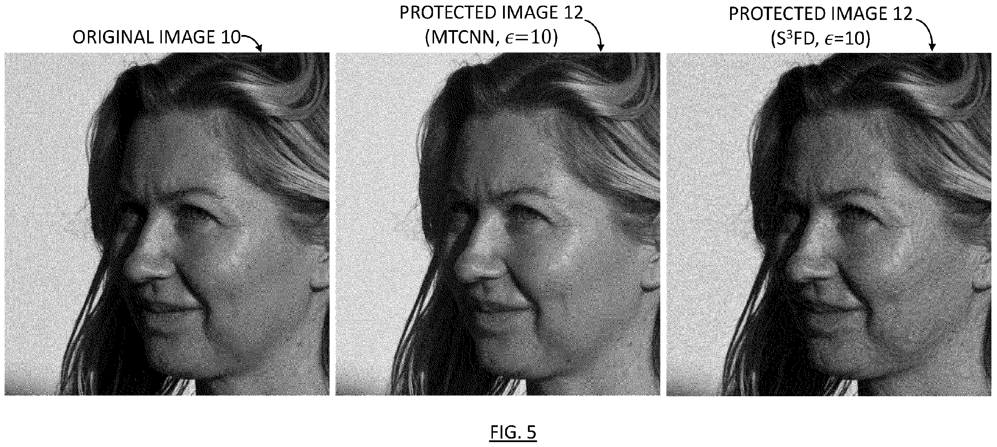

The tables of **Figure 4A** and **4B** show a comparative analysis of image protection against the S³FD and the MTCNN face detector, respectively, conducted on a set of 300 FFHQ images using an IntelR CoreTM i9-14900HX processor and an NVIDIA GeForce RTX 4080 graphics card. For each value of $\varepsilon$, from $\varepsilon$=1 to $\varepsilon$=10, variations in both quality (PSNR values, where higher values indicate better image quality, and BRISQUE scores [6], where lower values correspond to better quality) and performance (average number of iterations and average time to generate each frame) are observed. Increasing the radius $\varepsilon$ of the $\varepsilon$-ball reduces the number of iterations required to reach the stopping condition. Larger perturbations (i.e. greater values of $\varepsilon$) are more effective at disrupting face detection models, though they compromise visual fidelity, as reflected in the corresponding BRISQUE scores and **Figure 5,** which shows a comparison between an original image 10 and two protected images 12, a first image protected against the MTCNN face detector with $\varepsilon$=10 and a second image protected against the S³FD face detector with $\varepsilon$=10 (in the latter case visual fidelity with the original image is more compromised).

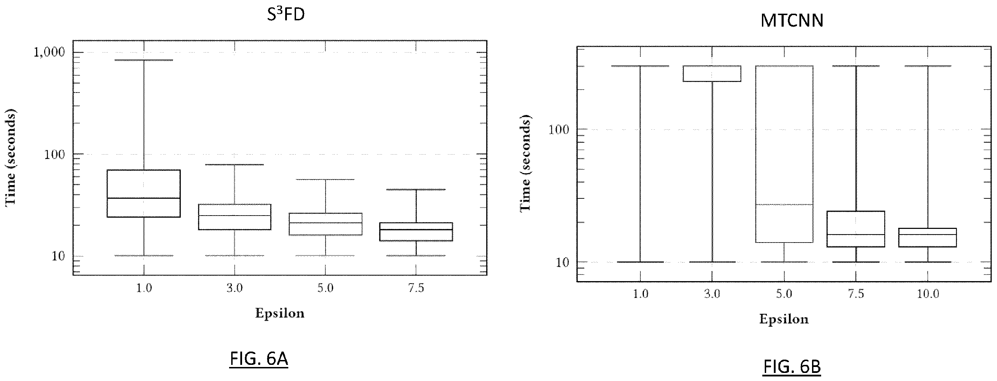

Moreover, increasing $\varepsilon$ not only reduces the average processing time but also reduces its variance across different frames, as depicted in **Figure 6A** showing logarithmic distribution of time for different $\varepsilon$ values and S³FD face detector, where it can be seen how as $\varepsilon$ increases and quality decreases, average execution times also decrease, and the range of times becomes narrower, making the processing times of different video frames much more predictable. This leads to greater temporal consistency, allowing for reliable predictions of computational requirements throughout a video sequence. The same behaviour can be shown with MTCNN in **Figure 6B.** Unlike S³FD, despite increasing $\varepsilon$ there are still outliers that require very high execution times. In this case, as MTCNN allows higher values of $\varepsilon$ without significantly degrading quality, the optimal solution is to increase $\varepsilon$ to eliminate these outliers and further reduce execution times.

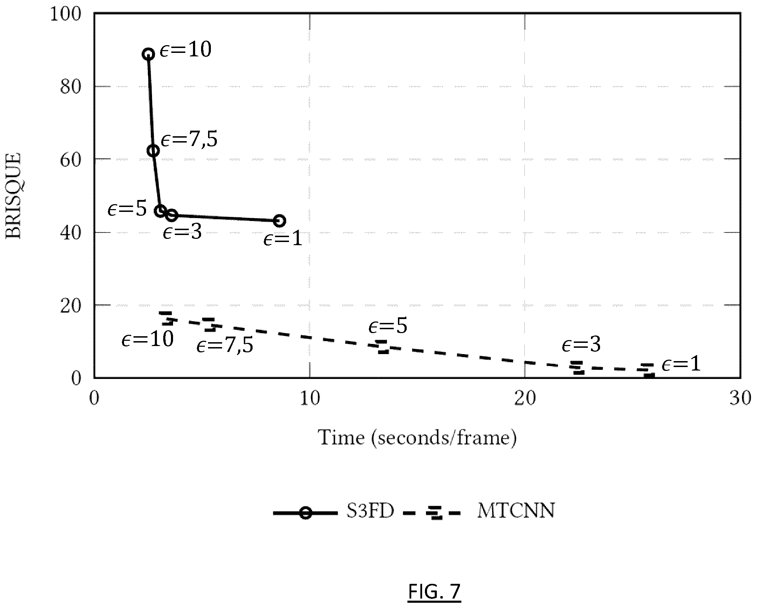

Finally, as illustrated in **Figure 7,** depicting the mean BRISQUE score degradation of S³FD and MTCNN as the $\varepsilon$ values increase, the robustness of the detection model is strongly correlated with its number of parameters. This implies that to preserve the original image quality, time and resources must be sacrificed to reduce $\varepsilon$. Additionally, there is a direct relationship between model parameters and difficulty, where MTCNN, with far fewer parameters than S³FD, causes less image degradation even with lower time requirements. For instance, S³FD, with its high parameter count, requires a BRISQUE score of at least 40 to be reliably fooled. In contrast, P-Net -the first-stage detector in the MTCNN pipeline- can be defeated with a BRISQUE score as low as 2.5. When computational efficiency is prioritized over image quality, BRISQUE values around 20 remain acceptable while significantly accelerating the protection process.

In an embodiment, the radius $\varepsilon$ of the $\varepsilon$-ball is a predetermined value comprised within the range of [1-10] when the pixels of the original image 10 are expressed in the RGB color model as an RGB triplet (R,G,B) in the range of 0 to 255, although the radius $\varepsilon$ could be greater than 10. If the selected value for $\varepsilon$ is, for instance, 10, this would mean that for each pixel $i$ of the original image 10 with RGB triplet $(R_i, G_i, B_i)$, the corresponding pixel in the protected image 12 would be included within $(R_i \pm 10, G_i \pm 10, B_i \pm 10)$. However, if the pixels are represented in a RGB triplet using a floating point value ranging from 0 to 1, the selected radius $\varepsilon$ would be comprised within a [0,004-0,04] range.

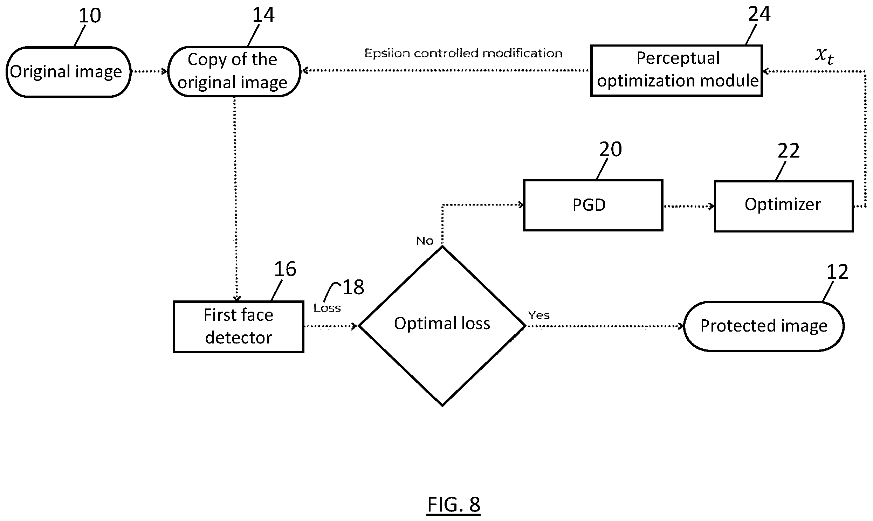

**Figure 8** represents, according to an embodiment, a flow diagram with the steps of the method 100 applied to an original image 10, such as a frame of a video. A copy of the original image 14 is provided as input to the first face detector 16 in the first iteration of the optimization loop. A loss 18 is computed using a loss function associated with the first face detector 16. A stopping condition is checked (for example, checking that the loss is optimal). If the loss is not optimal (e.g., it should be greater than a threshold), a gradient of the loss is computed and an adversarial image $x_t$ for the corresponding iteration $t$ is generated using projected gradient descent 20 (PGD) and an optimizer 22 that computes a gradient step size for this iteration.

In this embodiment the adversarial image is further modified using a perceptual optimization module 24, which minimizes the visual impact to the perception of human eyes by applying a mask that weighs the intensity to be applied on each pixel, taking into account the functioning of the human visual system, replicating techniques used in digital image watermarking algorithms. The perceptual optimization module 24 determines which pixels can be changed without affecting the visual impact, applying a perceptual optimization mask to change the pixels in a specific way. For the next iteration, the copy of the original image 14 is updated with the adversarial image modified by the perceptual optimization module 24.

In each iteration $t$, the perceptual optimization module 24 receives the current adversarial image $x_t$ and evaluates the perceptual relevance of individual pixel modifications based on characteristics of the human visual system (HVS). The perceptual optimization module 24 computes a perceptual mask $m_t$, wherein each value corresponds to a pixel location and represents the estimated visual saliency or perceptual impact of altering that pixel, as influenced by the local image content.

This perceptual mask $m_t$ is used to modulate the adversarial update, such that perceptually impactful regions are weighted accordingly. The updated adversarial image $x_{t+1}$ is computed as follows:

$$x_{t+1} = \Pi_{\mathcal{B}_\epsilon(x_0)}((x_t - \eta_t \cdot \hat{g}_t) \cdot m_t)$$

where:

- $x_0$ is the original input image,
- $\eta_t$ is the learning rate at iteration $t$,
- $\hat{g}_t$ is the (possibly estimated or projected) gradient of the loss with respect to $x_t$,
- $\mathcal{B}_\epsilon(x_0)$ denotes an $\varepsilon$-bounded neighborhood around $x_0$, and
- $\Pi$ represents a projection operator that enforces constraints (e.g., pixel value bounds or norm-based constraints).

The perceptual mask $m_t$ can be computed using established perceptual modeling techniques, including but not limited to:

- Human Visual System (HVS)-based perceptual shaping methods (e.g., Barni et al., "Perceptual shaping for robust image watermarking", 1998),

- visual saliency estimation techniques (e.g., Voloshynovskiy et al., "Robust image watermarking using perceptual masking and saliency", 2001),

- Just Noticeable Difference (JND) models (e.g., Hsu and Wu, "A just noticeable distortion model for images with applications to digital watermarking", 2002), or

- modern deep learning-based models that learn perceptual importance directly from data (e.g., HiDDeN framework by Zhu et al., "HiDDeN: Hiding Data with Deep Networks", NeurIPS 2018).

These perceptual models enable the adversarial attack process to be guided by human perceptual thresholds, enhancing imperceptibility while preserving attack efficacy.

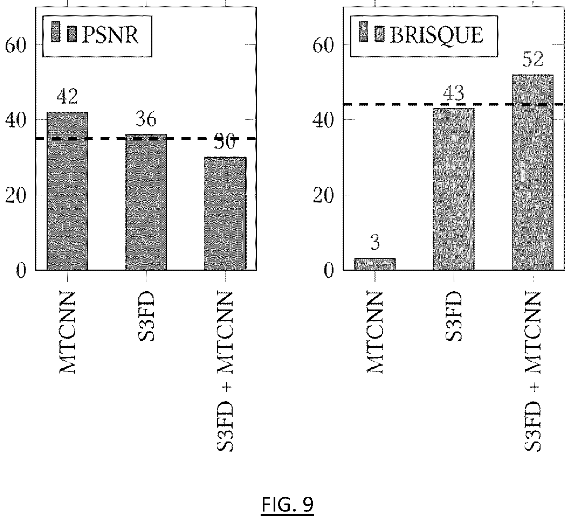

The present invention can also provide protection against multiple face detectors, despite the fact that simultaneous protection of each frame against multiple face detection models is generally infeasible in real-world scenarios due to the low minimum quality required to protect an image, as shown in **Figure 9,** which is primarily due to the trade-off between model complexity and perturbation strength: the more complex the model, the higher the required perturbation magnitude $\varepsilon$ to reach the stopping criterion (i.e., when no faces are detected). Figure 9 depicts a comparison of PSNR and BRISQUE values across different face detection models (MTCNN, S³FD, MTCNN + S³FD), wherein the horizontal dashed lines represent the threshold that is considered to indicate remarkably good quality in the context of FFHQ images. This threshold aligns approximately with the midpoint between $\varepsilon=1$ and $\varepsilon=3$ in the protection of the S³FD model.

The behavior of the loss function $\mathcal{L}(f_\theta)$ during the iterative process can be conceptualized as an asymptotic decay. For a given model $f_\theta$ and a fixed $\varepsilon$, the

projected gradient descent process reduces the detection loss at each iteration, but only toward a limiting value

$\mathcal{L}_\infty\left(\varepsilon, f_\theta\right)$:

$$\lim_{t \to \infty} \mathcal{L}(f_\theta(x_t)) = \mathcal{L}_\infty(\epsilon, f_\theta)$$

If this limit remains above the model's detection threshold $\tau_{loss}$, then no amount of iteration will cause the model to stop detecting faces. In that case, the selected $\varepsilon$ is insufficient for successful protection. Formally, the condition for a valid $\varepsilon$ becomes:

$$\mathcal{L}_\infty(\epsilon, f_\theta) < \tau_{loss}$$

Therefore, when designing a universal perturbation across multiple face detectors, the required $\varepsilon$ must satisfy this condition for all face detection models $f_{\theta_i}$ in the set of target detectors F. In practice, this leads to prohibitively large perturbations and unacceptable degradation in image quality.

To overcome this problem, an embodiment of the present invention proposes concealing from the face detector certain facial features of the person to be superseded, so that the autoencoder does not learn them, by dividing the original images 10 (e.g. video frames) into multiple subsets according to specific facial features (or face poses) and protect each subset of images against a different face detection model. In this way, by protecting the subsets of images/frames against the different face detectors available in the deepfake tools, the autoencoder will never learn a fundamental facial feature of the target person. Once each subset of images is protected against a different face detector, the end user who would attempt to perform an automatic preprocessing deepfake with the protected content will encounter one of the subsets outside their training set.

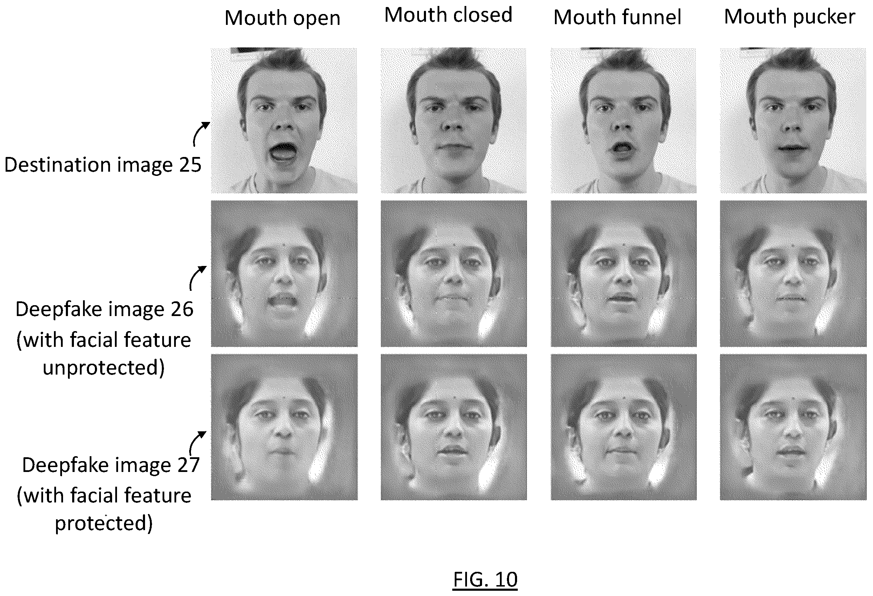

In an embodiment, four primary sub-categories for the facial features are used (mouth open, mouth closed, mouth funnel, mouth pucker), though there are additional options available (different facial features or profiles). **Figure 10** shows the effectiveness of training five models over approximately 20,000 epochs: a model trained with all images (middle row), a model trained without images of open-mouth poses (last row, first column), a model trained without images of closed-mouth poses (last row, second column), a model trained without images featuring the mouth funnel pose (last row, third column), and a model trained without images containing the mouth pucker pose (last row, fourth column). The first row shows the destination image 25, the second row shows the deepfake result (deepfake image 26) for the destination image using the model trained without feature protection, and the third row shows the deepfake result (deepfake image 27) for the destination image using the model trained without the specific facial feature (this image set has been protected). As shown in Figure 10, the destination image 25 is accurately mapped to the deepfake image 26 when the facial feature is unprotected (second row). However, when that facial feature is protected or concealed from the model, it is unable to reproduce it correctly (third row). Regarding the effectiveness of each set, no significant difference is observed between them. Nevertheless, both the quantitative values and the visual results indicate that hiding the "mouth open" feature from the model tends to produce clearly successful results.

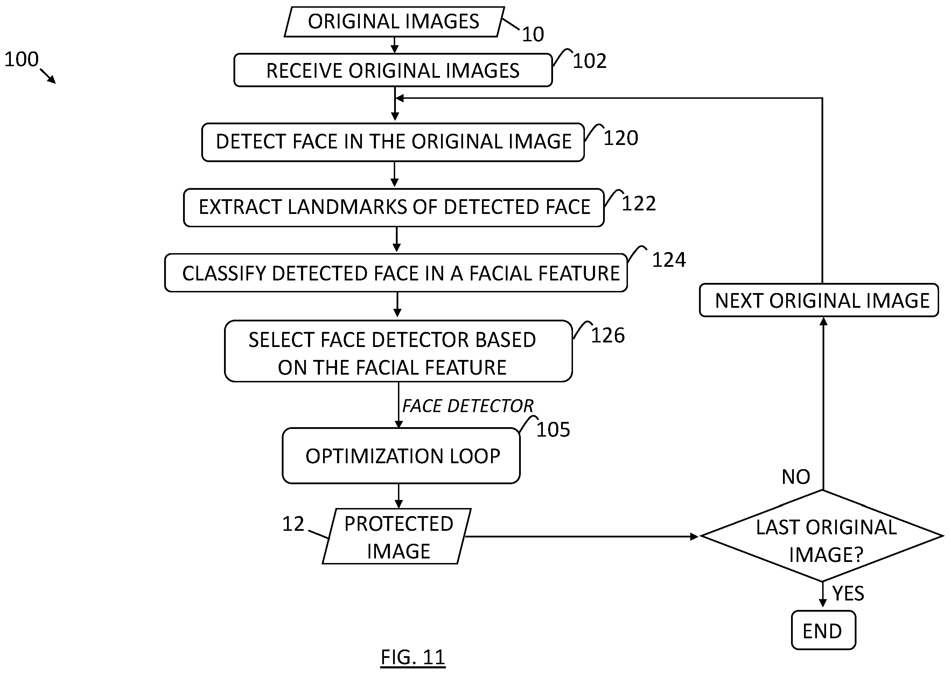

To achieve this kind of protection, an initial classification of original images 10 (or frames) prior to the optimization loop 105 of the image protection process is performed. In this embodiment, depicted in the flow diagram of **Figure 11,** the method 100 receives a plurality of original images 10 and further comprises, for each original image received and prior to the optimization loop 105: detecting 120 a face in the original image, extracting 122 landmarks of the detected face, classifying 124 the detected face in a facial feature from a set of facial features based on the landmarks, and selecting 126, from a set of face detectors, the first face detector 16 used in the optimization loop 105 based on the facial feature.

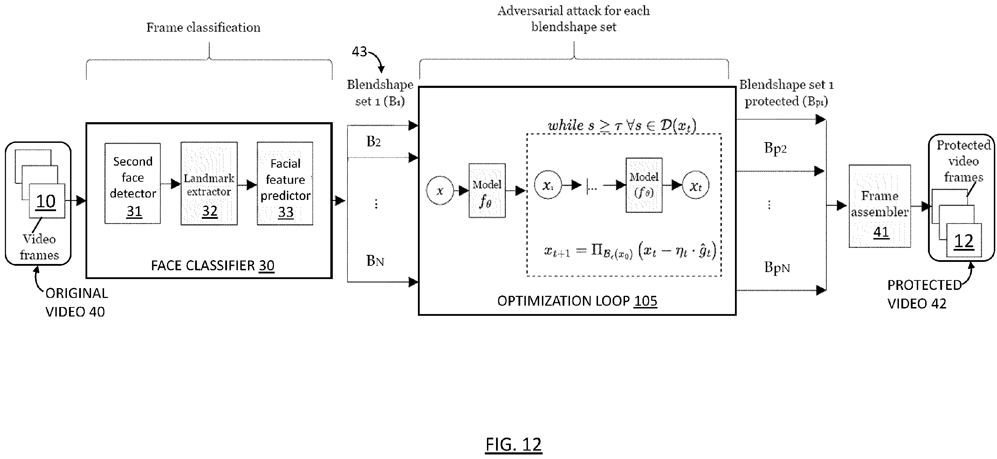

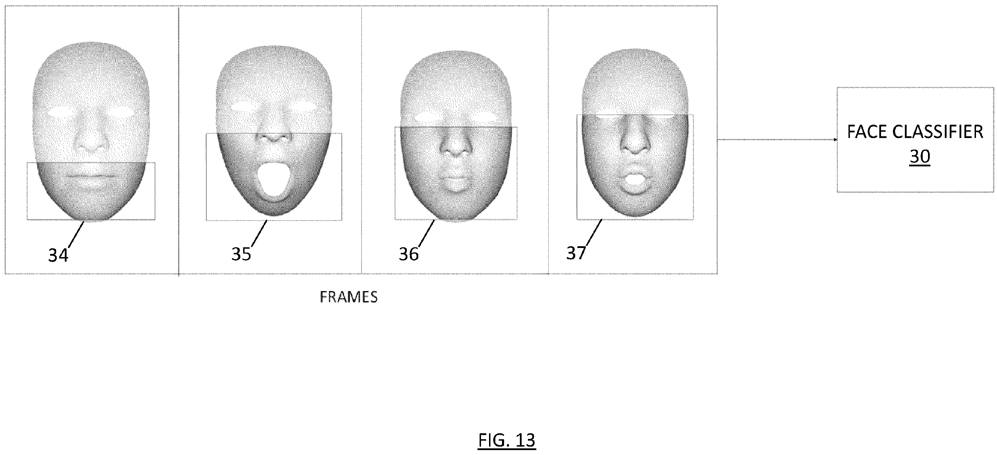

**Figure 12** shows, according to an embodiment, a schematic diagram of a system proposed to generate protection simultaneously against multiple detectors using facial features defined by sets of blend shapes, applying the approach previously described, which uses PGD with the AdaBelief optimizer. The original images, in this case an original video 40 formed by a set of video frames (original images 10), are classified in multiple classes that are disjoint, that is, that never occur at once. For each video frame the landmarks of the face (which include points of the mouth, eyes and nose) are extracted, which allows to identify the different landmark positions and classify the face based on the landmark positions. For instance, in an embodiment the MediaPipe blend shape coefficient estimator [7] is used to identify 478 landmarks of the face to later classify it in different facial features (e.g., different blend shapes). In the embodiment of Figure 12, the system comprises a face classifier 30 including a second face detector 31 (which may be different from the first face detector 16 used in the optimization loop 105), a landmark extractor 32 and a facial feature predictor 33 (e.g., a blend shape predictor). Among the facial features (or blend shapes) identified, the most relevant ones for the classification are the ones shown in **Figure 13:**

- Mouth closed 34: Represents when the mouth is closed.

- Mouth open 35: Represents when the mouth is open.

- Mouth pucker 36: Represents when the lips are pursed or puckered.

- Mouth funnel 37: Represents when the mouth forms a funnellike shape.

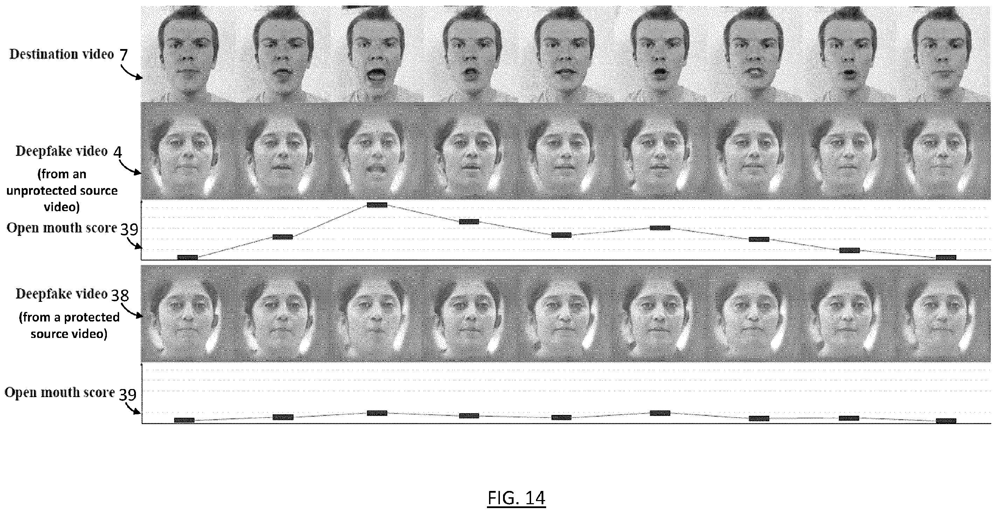

This ensures that if, for example, the subset of images classified as open mouth is protected against the S³FD model and that is the model used by the end user to align and crop their images, the deepfake result will be a person trying to talk with his mouth shut, as shown in the example of **Figure 14**. This example of preventing deepfakes from opening their mouths shows how the method 100 of the present invention can be used to prevent realistic video impersonation. In this example, a deepfake generated with DeepFaceLab fails to reproduce mouth motion due to the protection provided by the method. Mouth opening scores 39 (obtained in this case with MediaPipe) highlight the difference between deepfake videos 4 generated using unprotected source videos and deepfakes videos 38 generated using protected source videos.

In the embodiment of Figure 12, the face classifier 30 is a blend shape classifier, such as MediaPipe, which returns a set of blend shape parameters:

$$\mathrm{B}_\tau = \{\mathrm{B}_1^{(\tau)}, \mathrm{B}_2^{(\tau)}, ..., \mathrm{B}_n^{(\tau)}\}$$, where each $\mathrm{B}_i^{(\tau)}$

represents the value of a blend shape in frame $x_\tau$. These blend shape values are then used to classify each frame into a predefined category $\mathrm{B}_x$ (facial features or blend shapes), by assigning each $x_\tau$ to a category $C(\mathrm{B}_\tau) = \mathrm{B}_x$ using the blend shape predictor C. The predefined categories $\mathrm{B}_x$ or set of facial features may be, for instance: mouth closed 34, mouth open 35, mouth pucker 36, mouth funnel 37. In an embodiment, the set of facial features includes at least two of these facial features.

Subsequently, each frame $x_\tau$ is protected against a face detector model $f_\theta$ by applying PGD in combination with the AdaBelief optimizer. The goal is to generate an adversarial image $\widetilde{x}_\tau$ that is resistant to detection by model $f_\theta$, while staying within a valid perturbation defined by a set $\mathcal{B}_\epsilon(x_\tau)$ that restricts the size of the perturbation according to an $L_\infty$ norm. This update process is repeated until an adversarial image is achieved that is resistant to the face detection model.

Finally, after protecting each frame $x_\tau$, the protected frames $\widetilde{x}_\tau$ are reordered by a frame assembler 41 according to the initial classification performed based on the blend shape parameters, thereby obtaining a protected video 42 formed by a sequence of protected video frames with the corresponding order of the original video 40. The resulting video is reconstructed ensuring that each frame, classified into a category $\mathrm{B}_x$, is protected against a specific detector $f_\theta$ for that category. The classification and protection process allows the generation of a video where each frame is robust to different face detectors, while maintaining the coherence of the original video expressions.

For example, in the embodiment of Figure 12

the face classifier 30 may classify the video frames in four different categories or subsets 43 (based on the predicted facial feature): blend shape sets $B_1$ (mouth closed), $B_2$ (mouth open), $B_3$ (mouth pucker) and $B_4$ (mouth funnel). An adversarial attack (as defined for instance in the optimization loop 105 of Figure 2) is carried out for each subset $\{B_1, B_2, B_3, B_4\}$, using a specific and corresponding first face detector 16 $\{f_{\theta_1}, f_{\theta_2}, f_{\theta_3}, f_{\theta_4}\}$ for each subset. For instance, $f_{\theta_1}$ may be the S³FD face detector used for mouth closed subset $B_1$, $f_{\theta_2}$ the MTCNN face detector used for mouth open subset $B_2$, $f_{\theta_3}$ the DN CV2 face detector used for mouth pucker subset $B_3$, and $f_{\theta_4}$ again the S³FD face detector used for mouth funnel subset $B_4$. A particular first face detector 16 may be used for one or more different subsets (e.g., S³FD for subsets $B_1$ and $B_4$), provided that at least two different first face detectors 16 are used for the subsets 43.

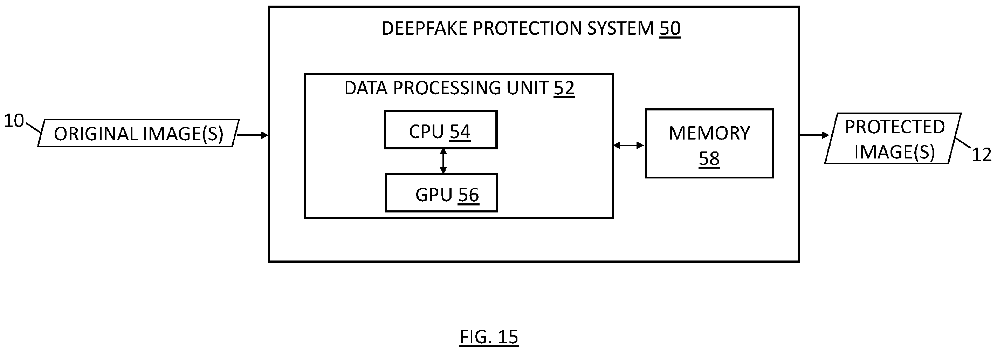

The present invention also refers to a deepfake protection system for protecting image or video content against the generation of deepfakes. As shown in the embodiment of **Figure 15,** the deepfake protection system 50 comprises a data processing unit 52, including one or more processors (e.g., a central processing unit, CPU, 54 and a graphics processing unit, GPU, 56), and a memory 58 storing a set of instructions which, when executed by the one or more processors (54, 56), causes the one or more processors to carry out the steps of the method 100 as previously defined, for instance, in the flow diagrams of Figures 2 or 11. The deepfake protection system 50 receives one or more original images 10 (which can be an original video) and generates corresponding protected images 12 (which can be a protected video). The deepfake protection system 50 may be implemented in a computer, a laptop or any other data processing device.

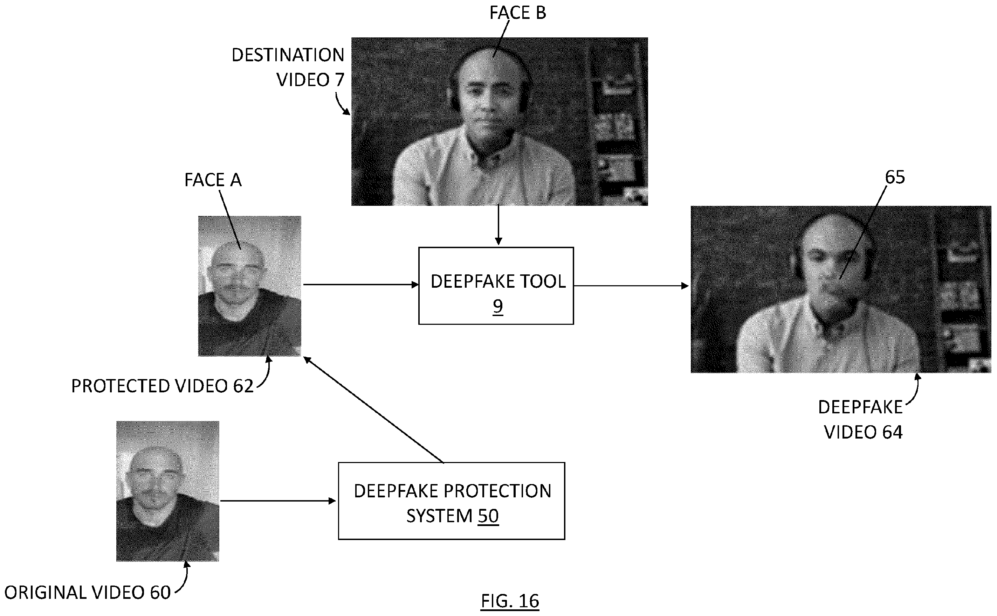

**Figure 16** depicts an example similar to the one shown in Figure 1B, but in this case using a protected video. In this example an original video 60 is used by the deepfake protection system 50 to obtain a protected video 62, which is made available to the public (e.g., through the Internet), replacing the original video 60. When a deepfake tool 9 is applied to the protected video 62 (used as a source video) and a destination video 7 to generate a deepfake video 64 in which the face of the person A in the source video 6 is intended to replace the face of the person B in the destination video 7, the quality of the deepfake video 64 is very low and the spoofing is completely disabled, since it is clear that the video is a deepfake (irregularities 65 appear around the mouth of the face in the deepfake video 64).

**Claims**

1. A computer-implemented method of protecting image or video content against the generation of deepfakes, the method (100) comprising:

receiving (102) at least one original image (10);

obtaining (104) a copy (14) of each original image (10);

for each original image (10), iteratively performing an optimization loop (105) at least until a stopping condition is met, each iteration of the optimization loop (105) including:

detecting (106) faces in the copy (14) of the original image with a first face detector (16); calculating (108) a loss (18) using a loss function associated with the first face detector (16);

calculating (110) a gradient of the loss (18); generating (112) an adversarial image by applying projected gradient descent (20) on the loss function using a projection operator, wherein the gradient step size is obtained using an optimizer (22) and the projection operator is a projection on a $\varepsilon$-ball of radius $\varepsilon$ around the original image (10); and updating (114) the copy (14) of the original image with the adversarial image; and

obtaining (116) a protected image (12) associated to each original image (10), the protected image (12) being the adversarial image obtained in the last iteration of the corresponding original image (10).

2. The method of claim 1, wherein a plurality of original images is received, the method (100) further comprising, for each original image (10) received:

detecting (120) a face in the original image (10); extracting (122) landmarks of the detected face; classifying (124), based on the landmarks, the detected face in a facial feature from a set of facial features; and

selecting (126), from a set of face detectors, the first face detector (16) used in the optimization loop (105) based on the facial feature.

3. The method of claim 2, wherein the set of facial features includes at least two of the following: mouth closed (34), mouth open (35), mouth pucker (36), and mouth funnel (37).

4. The method of any preceding claim, wherein the loss function is selected to minimize the number of detected faces.

5. The method of claim 4, wherein the loss function is the sum of confidence scores of detected faces, and the stopping condition is met when all the confidence scores drop below a confidence threshold ($\tau$).

6. The method of any of claims 1 to 3, wherein the loss function is selected to maximize the number of detected faces.

7. The method of claim 6, wherein the loss function is the sum of confidence scores of detected faces, the adversarial image being generated such that the loss (18) is increased in each iteration.

8. The method of any of claims 1 to 3, wherein the loss function is selected to maximize the size of the bounding boxes.

9. The method of claim 8, wherein the loss function is the sum of the area of the bounding boxes detected by the first face detector (16), the adversarial image being generated such that the loss (18) is increased in each iteration; and wherein the stopping condition is met when the area of the smallest bounding box exceeds a threshold.

10. The method of any preceding claim, wherein the optimizer (22) is the Adabelief optimizer.

11. A deepfake protection system for protecting image or video content against the generation of deepfakes, the system (50) comprising at least one processor (54,56) and at least one memory (58) storing a set of instructions which, when executed by the at least one processor (54,56), causes the at least one processor (54,56) to:

receive at least one original image (10);

obtain a copy (14) of each original image (10);

for each original image (10), iteratively perform an optimization loop (105) at least until a stopping condition is met, each iteration of the optimization loop (105) including:

detecting faces in the copy (14) of the original image with a first face detector (16); calculating a loss (18) using a loss function associated with the first face detector (16); calculating a gradient of the loss (18); generating an adversarial image by applying projected gradient descent (20) on the loss function using a projection operator, wherein the gradient step size is obtained using an optimizer (22) and the projection operator is a projection on a $\varepsilon$-ball of radius $\varepsilon$ around the original image (10); and updating the copy (14) of the original image with the adversarial image; and

obtain a protected image (12) associated to each original image (10), the protected image (12) being the adversarial image obtained in the last iteration of the corresponding original image (10).

**12.** The deepfake protection system of claim 11, comprising a face classifier (30) including:

a second face detector (31) configured to detect a face in each original image (10);
a landmark extractor (32) configured to extract landmarks of the detected face; and
a facial feature predictor (33) configured to classify, based on the landmarks, the detected face in a facial feature from a set of facial features; and

wherein the at least one processor (54,56) is configured to select, for each original image (10), the first face detector (16) used in the optimization loop (105) based on the facial feature of the corresponding original image (10).

**13.** The deepfake protection system of claim 12, wherein the set of facial features includes at least two of the following: mouth closed (34), mouth open (35), mouth pucker (36), and mouth funnel (37).

**14.** The deepfake protection system of any of claims 11 to 13, further comprising a perceptual optimization module (24) configured to update the adversarial image in each iteration using a perceptual mask $m_t$ computed with perceptual modeling techniques.

**15.** A non-transitory computer-readable storage medium for protecting image or video content against the generation of deepfakes, comprising computer code instructions that, when executed by at least one processor, cause the at least one processor to carry out the method of any of claims 1 to 10.

**Amended claims in accordance with Rule 137(2) EPC.**

**1.** A computer-implemented method of protecting image or video content against the generation of deepfakes, the method (100) comprising:

receiving (102) a plurality of original images (10);
obtaining (104) a copy (14) of each original image (10);
for each original image (10), iteratively performing an optimization loop (105) at least until a stopping condition is met, each iteration of the optimization loop (105) including:

detecting (106) faces in the copy (14) of the original image with a first face detector (16) used by deepfake tools;
calculating (108) a loss (18) using a loss function associated with the first face detector (16);

calculating (110) a gradient of the loss (18);
generating (112) an adversarial image by applying projected gradient descent (20) on the loss function using a projection operator, wherein the projection operator is a projection on a $\varepsilon$-ball of radius $\varepsilon$ around the original image (10); and
updating (114) the copy (14) of the original image with the adversarial image; and

obtaining (116) a protected image (12) associated to each original image (10), the protected image (12) being the adversarial image obtained in the last iteration of the corresponding original image (10);

wherein the method (100) further comprises, for each original image (10) received:

detecting (120) a face in the original image (10);
extracting (122) landmarks of the detected face;
classifying (124), based on the landmarks, the detected face in a facial feature from a set of facial features; and
selecting (126), from a set of target face detectors, the first face detector (16) used in the optimization loop (105) based on the facial feature.

**2.** The method of claim 1, wherein the set of facial features includes at least two of the following: mouth closed (34), mouth open (35), mouth pucker (36), and mouth funnel (37).

**3.** The method of any preceding claim, wherein the loss function is selected to minimize the number of detected faces.

**4.** The method of claim 3, wherein the loss function is the sum of confidence scores of detected faces, and the stopping condition is met when all the confidence scores drop below a confidence threshold ($\tau$).

**5.** The method of any of claims 1 to 2, wherein the loss function is selected to maximize the number of detected faces.

**6.** The method of claim 5, wherein the loss function is the sum of confidence scores of detected faces, the adversarial image being generated such that the loss (18) is increased in each iteration.

**7.** The method of any of claims 1 to 2, wherein the loss function is selected to maximize the size of the bounding boxes.

**8.** The method of claim 7, wherein the loss function is the sum of the area of the bounding boxes detected by the first face detector (16), the adversarial image being generated such that the loss (18) is increased in each iteration; and wherein the stopping condition is met when the area of the smallest bounding box exceeds a threshold.

9. The method of any preceding claim, wherein the gradient step size is obtained using an optimizer (22).

10. The method of claim 9, wherein the optimizer (22) is the Adabelief optimizer.

11. A deepfake protection system for protecting image or video content against the generation of deepfakes, the deepfake protection system (50) comprising at least one processor (54,56) and at least one memory (58) storing a set of instructions which, when executed by the at least one processor (54,56), causes the at least one processor (54,56) to:

   receive at least one original image (10);
   obtain a copy (14) of each original image (10);
   for each original image (10), iteratively perform an optimization loop (105) at least until a stopping condition is met, each iteration of the optimization loop (105) including:

   detecting faces in the copy (14) of the original image with a first face detector (16) used by deepfake tools;
   calculating a loss (18) using a loss function associated with the first face detector (16);
   calculating a gradient of the loss (18);
   generating an adversarial image by applying projected gradient descent (20) on the loss function using a projection operator, wherein the projection operator is a projection on a $\varepsilon$-ball of radius $\varepsilon$ around the original image (10); and
   updating the copy (14) of the original image with the adversarial image; and

   obtain a protected image (12) associated to each original image (10), the protected image (12) being the adversarial image obtained in the last iteration of the corresponding original image (10);
   wherein the deepfake protection system (50) further comprises a face classifier (30) including:

   a second face detector (31) configured to detect a face in each original image (10);
   a landmark extractor (32) configured to extract landmarks of the detected face; and
   a facial feature predictor (33) configured to classify, based on the landmarks, the detected face in a facial feature from a set of facial features; and

   wherein the at least one processor (54,56) is configured to select, from a set of target face detectors and for each original image (10), the first face detector (16) used in the optimization loop (105) based on the facial feature of the corresponding original image (10).

12. The deepfake protection system of claim 11, wherein the set of facial features includes at least two of the following: mouth closed (34), mouth open (35), mouth pucker (36), and mouth funnel (37).

13. The system of any of claim 11 to 12, wherein the gradient step size is obtained using an optimizer (22).

14. The deepfake protection system of any of claims 11 to 13, further comprising a perceptual optimization module (24) configured to update the adversarial image in each iteration using a perceptual mask $m_t$ computed with perceptual modeling techniques.

15. A non-transitory computer-readable storage medium for protecting image or video content against the generation of deepfakes, comprising computer code instructions that, when executed by at least one processor, cause the at least one processor to carry out the method of any of claims 1 to 10.

FIG. 1A

FACE B

DESTINATION
VIDEO 7

FACE A

SOURCE VIDEO 6

DEEPFAKE TOOL
9

FACE A

DEEPFAKE
VIDEO 4

FIG. 1B

```
                              ┌─────────────────────┐
                              │ ORIGINAL IMAGE(S)   │ ╲ 10
                              └─────────────────────┘
100 ↘          ┌──────────────────────────────────────┐
               │ RECEIVE AT LEAST ONE ORIGINAL IMAGE   │ ⌐102
               └──────────────────────────────────────┘
               ┌──────────────────────────────────────┐      ┌──────────────────────┐
               │ OBTAIN A COPY OF ORIGINAL IMAGE       │ ⌐104 │ NEXT ORIGINAL IMAGE  │
               └──────────────────────────────────────┘      └──────────────────────┘
               ┌──────────────────────────────────────┐                 NO
               │ DETECT FACES IN THE COPY OF THE       │ ⌐106
               │ ORIGINAL IMAGE USING A FACE DETECTOR  │         LAST ORIGINAL    YES
               └──────────────────────────────────────┘            IMAGE?
               ┌──────────────────────────────────────┐
               │ CALCULATE A LOSS USING A LOSS         │ ⌐108              END
               │ FUNCTION ASSOCIATED WITH THE FACE     │
               │ DETECTOR                              │
OPTIMIZATION   └──────────────────────────────────────┘
LOOP                    STOPPING          ⌐109       ┌────────────┐    ┌──────────┐
105                     CONDITION?   YES             │ OBTAIN     │⌐116│PROTECTED │
                                                     │ PROTECTED  │───▶│ IMAGE    │╲12
                            NO                       │ IMAGE      │    └──────────┘
               ┌──────────────────────────────────────┐└────────────┘
               │ CALCULATE A GRADIENT OF THE LOSS      │ ⌐110
               └──────────────────────────────────────┘
               ┌──────────────────────────────────────────────────────┐
               │ GENERATE AN ADVERSARIAL IMAGE BY APPLYING PGD ON THE  │⌐112
               │ LOSS FUNCTION USING A PROJECTION OPERATOR, WHEREIN    │
               │ THE GRADIENT STEP SIZE IS OBTAINED USING AN           │
               │ OPTIMIZER AND THE PROJECTION OPERATOR IS A            │
               │ PROJECTION ON A ε-BALL OF RADIUS ε AROUND THE         │
               │ ORIGINAL IMAGE                                        │
               └──────────────────────────────────────────────────────┘
               ┌──────────────────────────────────────┐⌐114
               │ UPDATE THE COPY OF THE ORIGINAL IMAGE │
               │ WITH THE ADVERSARIAL IMAGE            │
               └──────────────────────────────────────┘
```

FIG. 2

FIG. 3A

EP 4 651 100 A1

FIG. 3B

S³FD

| Epsilon | Mean iterations | PSNR | Brisque | Seconds / frame |
|---|---|---|---|---|
| 1 | 64,256 | 36,227 | 43,139 | 8,594 |
| 3 | 25,760 | 34,963 | 44,647 | 3,588 |
| 5 | 21,594 | 33,285 | 45,833 | 3,073 |
| 7,5 | 18,724 | 31,476 | 62,332 | 2,733 |
| 10 | 16,913 | 29,953 | 88,809 | 2,511 |

FIG. 4A

MTCNN

| Epsilon | Mean iterations | PSNR | Brisque | Seconds / frame |
|---|---|---|---|---|
| 1 | 258,91 | 42,682 | 2,148 | 25,706 |
| 3 | 227,64 | 39,434 | 2,806 | 22,426 |
| 5 | 133,61 | 35,583 | 8,622 | 13,350 |
| 7,5 | 51,42 | 32,758 | 14,574 | 5,318 |
| 10 | 31,07 | 30,439 | 16,268 | 3,331 |

FIG. 4B

18

FIG.5

S³FD

MTCNN

Time (seconds)

Epsilon

FIG. 6A

FIG. 6B

FIG. 7

FIG. 8

FIG. 9

FIG. 10

```
                          ORIGINAL IMAGES
                                              10
  100
                       RECEIVE ORIGINAL IMAGES        102


                   DETECT FACE IN THE ORIGINAL IMAGE        120


                  EXTRACT LANDMARKS OF DETECTED FACE        122


                 CLASSIFY DETECTED FACE IN A FACIAL FEATURE      124
                                                                          NEXT ORIGINAL IMAGE

                   SELECT FACE DETECTOR BASED        126
                      ON THE FACIAL FEATURE

                          FACE DETECTOR
                                          105
                        OPTIMIZATION LOOP
                                                          NO

                    PROTECTED
           12         IMAGE                            LAST ORIGINAL
                                                         IMAGE?

                                                         YES

                                                          END
```

FIG. 11

FIG. 12

FRAMES

FACE CLASSIFIER
30

FIG. 13

EP 4 651 100 A1

FIG. 14

DEEPFAKE PROTECTION SYSTEM 50

DATA PROCESSING UNIT 52

CPU 54

GPU 56

MEMORY 58

10 ORIGINAL IMAGE(S)

PROTECTED IMAGE(S) 12

FIG. 15

EP 4 651 100 A1

FACE B

DESTINATION VIDEO 7

FACE A

PROTECTED VIDEO 62

DEEPFAKE TOOL 9

65

DEEPFAKE VIDEO 64

ORIGINAL VIDEO 60

DEEPFAKE PROTECTION SYSTEM 50

FIG. 16

Europäisches Patentamt

European Patent Office

Office européen des brevets

# EUROPEAN SEARCH REPORT

**Application Number**

EP 25 38 2523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAO HUANG ET AL: "CMUA-Watermark: A Cross-Model Universal Adversarial Watermark for Combating Deepfakes", ARXIV.ORG, CORNELL UNIVERSITY LIBRARY, 201 OLIN LIBRARY CORNELL UNIVERSITY ITHACA, NY 14853, 14 December 2021 (2021-12-14), XP091107794, | 1,11,15 | INV. G06V10/82 G06V40/16 |
| A | * the whole document * | 2-10, 12-14 | |
| X | ----- GUAN WEINAN ET AL: "Defending Against Deepfakes with Ensemble Adversarial Perturbation", 2022 26TH INTERNATIONAL CONFERENCE ON PATTERN RECOGNITION (ICPR), IEEE, 21 August 2022 (2022-08-21), pages 1952-1958, XP034235886, DOI: 10.1109/ICPR56361.2022.9956501 [retrieved on 2022-11-29] | 1,11,15 | |
| A | * the whole document * | 2-10, 12-14 | TECHNICAL FIELDS SEARCHED (IPC) |
| A | ----- CN 115 936 958 A (NANJING UNIVERSITY OF TECHNOLOGY) 7 April 2023 (2023-04-07) * the whole document * | 1-15 | G06V |
| A | ----- RUIZ NATANIEL ET AL: "Disrupting Deepfakes: Adversarial Attacks Against Conditional Image Translation Networks and Facial Manipulation Systems", 3 March 2020 (2020-03-03), SPRINGER, PAGE(S) 236 - 251, XP047574816, * the whole document * ----- | 1-15 | |

The present search report has been drawn up for all claims

| Place of search | Date of completion of the search | Examiner |
|---|---|---|
| The Hague | 21 August 2025 | de Castro Palomares |

EPO FORM 1503 03.82 (P04C01)

## ANNEX TO THE EUROPEAN SEARCH REPORT
## ON EUROPEAN PATENT APPLICATION NO.

EP 25 38 2523

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2025

| Patent document cited in search report | Publication date | Patent family member(s) | Publication date |
|---|---|---|---|
| CN 115936958 A | 07-04-2023 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG S. et al.** *S3FD: Single shot scale-invariant face Detector*, August 2017
- **ZHANG K. et al.** Joint face detection and alignment using multitask cascaded convolutional networks. *IEEE Signal Processing Letters*, August 2016, vol. 23 (10), 1499-1503
- **WANG C. et al.** OpenCV: DNN-based face Detection and Recognition. *OpenCV*
- **ATHALYE A. et al.** *Towards deep learning models resistant to adversarial attacks*, 2017
- **YANG et al.** *Adversarial example generation with AdaBelief Optimizer and Crop Invariance*, February 2021
- **A. MITTAL** ; **A. K. MOORTHY** ; **A. C. BOVIK.** No-Reference image quality assessment in the spatial domain.. *IEEE Transactions on Image Processing*, August 2012, vol. 21 (12), 4695-4708
- **LUGARESI C. et al.** *Mediapipe: a framework for building perception pipelines*, 2019
- **BARNI et al.** *Perceptual shaping for robust image watermarking*, 1998
- **VOLOSHYNOVSKIY et al.** *Robust image watermarking using perceptual masking and saliency*, 2001
- **HSU** ; **WU**. *A just noticeable distortion model for images with applications to digital watermarking*, 2002
- **ZHU et al.** HiDDeN: Hiding Data with Deep Networks. *NeurIPS*, 2018